(19) Europäisches Patentamt
European Patent Office
Office européen des brevets

(11) Veröffentlichungsnummer: **0 079 857**
**B1**

(12) **EUROPÄISCHE PATENTSCHRIFT**

(45) Veröffentlichungstag der Patentschrift: **20.02.85**

(51) Int. Cl.[4]: **C 09 D 3/58**, C 08 L 63/00, C 09 D 5/04

(21) Anmeldenummer: **82810478.6**

(22) Anmeldetag: **08.11.82**

(54) **Verfahren zur Erhöhung der Viskosität von Epoxidharz enthaltenden Mischungen.**

(30) Priorität: **13.11.81 GB 8134290**

(43) Veröffentlichungstag der Anmeldung: **25.05.83 Patentblatt 83/21**

(45) Bekanntmachung des Hinweises auf die Patenterteilung: **20.02.85 Patentblatt 85/08**

(84) Benannte Vertragsstaaten: **BE CH DE FR GB IT LI NL**

(56) Entgegenhaltungen:
**DE-B- 2 255 314**
**FR-A- 2 441 649**
**GB-A- 926 037**
**US-A- 4 304 693**
**CHEMICAL ABSTRACTS, Band 81, 1974, Seite 248, Nr. 140195q, Columbus, Ohio, USA**

(73) Patentinhaber: **CIBA-GEIGY AG**
**Postfach**
**CH-4002 Basel (CH)**

(72) Erfinder: **Andrews, Christopher Michael**
**12 Hope Street**
**Cambridge CB1 3NA (GB)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 079 857 B1

Jouve, 18, rue St-Denis, 75001 Paris, France

**Beschreibung**

Die Erfindung betrifft ein Verfahren zur Erhöhung der Viskosität von Epoxidharz enthaltenden Mischungen durch Vermischen des Harzes mit bestimmten Thixotropie erzeugenden Stoffen. Seit langer Zeit waren Epoxidharze, d. h. Materialien, welche im Mittel pro Molekül mehr als eine 1,2-Epoxidgruppe enthalten, zur Verwendung in gelartigen Beschichtungsmassen und anderen zur Erzeugung dicker Schichten geeigneter Massen sehr erwünscht. Thixotropische Zusammensetzungen, welche leicht aufgebracht werden können, nicht ablaufen und nicht zur Gardinenbildung neigen, so dass also die Bildung harzfreier Stellen vermieden wird, sind besonders wertvoll. Thixotropie kann durch Zusatz von Kieselsäure oder Asbest herbeigeführt werden, aber die Einverleibung dieser Materialien ist mit Staubentwicklung verbunden und verursacht so Handhabungsprobleme. Wegen der Gesundheitsgefährdung der Umwelt ist man von der Verwendung solcher Stoffe abgekommen. Ferner steigt die Viskosität einer Mischung sofort stark an, wenn man die Verdickungsmittel in das Harz oder in dessen Härter oder in beide einverleibt. Für die Mischung des Harzes und des Härters sind daher spezielle Apparate, welche für die Verarbeitung viskoser Flüssigkeiten geeignet sind, erforderlich. Für viele Anwendungen stehen solche Apparate zur Verfügung, sie fehlen jedoch oft in den Fällen, in welchen die Mischung am Verwendungsort durchgeführt werden muss, oft unter freiem Himmel, wie insbesondere im Bauwesen, und somit möglicherweise bei niedrigen Temperaturen, wenn die Flüssigkeiten noch stärker viskos sind. Zur Überwindung dieser Schwierigkeiten hat man bereits andere Verfahren vorgeschlagen.

In der britischen Patentschrift 1 230 334 wird z. B. ein Verfahren beschrieben, nach welchem ein Viskositätsanstieg durch eine in situ-Reaktion zwischen einem aliphatischen primären Monoamin und einem aliphatischen oder aromatischen Diisocyanat bewirkt wird. Gemäss der britischen Patentschrift 1 454 388 kann ein Ansteigen der Viskosität durch eine in situ-Reaktion zwischen einem primären Polyamin, welches gegebenenfalls ein sekundäres Polyamin enthält, und einem Monoisocyanat, gegebenenfalls mit einem Diisocyanat, erreicht werden.

Auf solche Art hergestellte Polyharnstoffe ergeben zwar thixotrope Mischungen, aber die Herstellung ist mit mehreren Nachteilen verbunden. Sie ist ausserordentlich empfindlich auf kleine Schwankungen in den Amin- und Isocyanatmengen, auf Temperaturänderungen und die beim Mischen der Komponenten angewendeten Bedingungen. Falls die Komponenten zusammen mit Epoxidharzen verwendet werden, können sie nicht als Zwei-Pack-System geliefert werden, da das Isocyanat sowohl mit dem Epoxidharz als auch mit dem Amin reagieren würde. Solche Zusammensetzungen sind daher wirtschaftlich bedeutungslos.

Es hat sich nun gezeigt, dass die Viskosität von Epoxidharzen durch Einverleibung bestimmter Organo-orthosilikate, einer mindestens mässig starken Base und Wasser zu gallertartigen Flüssigkeiten erhöht werden kann. Es handelt sich dabei nicht allein um eine Verdickungswirkung, da bei raschem Rühren die Mischung von Epoxidharz, organo-silikat, Base und Wasser weitgehend ihre Viskosität verkleinert, d. h. die Mischung ist thixotrop. Vermutlich katalysiert die Base die Hydrolyse der Organo-orthosilikate durch das Wasser, wobei sehr rasch hydratisierte Kieselsäure im Harz entsteht, welche das schnelle Anwachsen der Viskosität der Mischung bewirkt.

Diese Methode bewältigt viele Probleme, auf welche ältere Verfahren zur Erhöhung der Viskosität gestossen sind. Die Zusammensetzungen verursachen keine Staubwirbel, sie können als Zweipack-Mischungen geliefert werden (da das Silikat mit dem Epoxidharz nicht reagiert), und die zugefügte Silikatmenge ist nicht besonders kritisch. Wenn solche Mischungen zur Härtung des Harzes ungenügende Basenmengen enthalten, sind sie während längerer Zeit lagerstabil, wenn sie jedoch mit einem Härtungsmittel für Epoxidharze vermischt sind, härten sie sofort. Zum Mischen und Härten an der Verwendungsstelle sind insbesondere solche Mischungen in idealer Weise geeignet, welche eine genügende Menge Base enthalten, um das Epoxidharz zu härten.

Die Einverleibung von organischen Orthosilikaten in Epoxidharzmischungen ist nicht neu. In der SU Patentschrift Nr. 421 659 (Chemical Abstracts Bd. 81, Nr. 140195q) werden Zusammensetzungen beschrieben, welche eine verbesserte Klebkraft auf schlackenglaskeramische Böden aufweisen und welche ein Epoxidharz, ein Polyäthylenpolyamin als Härter, eine flüssige Gummisubstanz und Tetraäthoxysilan enthalten. In der SU Patentschrift Nr. 514 005 (Chemical Abstracts Bd. 85, Nr. 79056j) werden Epoxidharzmischungen zur Dichtung von Fugen zwischen schlackenglaskeramischen Bodenplatten beschrieben. Diese Mischungen enthalten ein Epoxidharz, Butylmethacrylat, Diäthylentriamin und Tetrakisfurfuryloxysilan. In der deutschen Offenlegungsschrift 3 005 499 werden bei Raumtemperatur härtende Zusammensetzungen beschrieben, welche ein Epoxidharz, einen Härter, wie Diäthylentriamin, Diäthylaminopropylamin oder ein Amináthylenoxidaddukt, und eine organische Silikonverbindung, welche eine Alkenoxy oder Cycloakenoxygruppe direkt an das Silikon gebunden aufweist, enthalten.

Die SU Patentschrift Nr. 779 338 (Derwent C.P.I. Abstract Nr. 54758D) offenbart polymere Zementzusammensetzungen, welche (I) ein Epoxidharz, (II) Aethylendiamin als Härter für (I), (III) Aethylsilikat, (IV) Wasser und (V) metallisierte Kohlenstoffasern als elektrischen Leiter enthalten. Die Zusammensetzungen werden für Beschichtungen und die Herstellung von elektrischen Heizgeräten verwendet, und die Einverleibung von (III) (15 bis 100 Teile auf 100 Teile des Harzes) zusammen mit dem Härter (II) und dem Stromleiter (V) dienen zur Erzielung einer Zusammensetzung mit erhöhter Leitfähigkeit.

Die japanische Patentpublikation Nr. 56-125465 (Derwent C.P.I. Abstract No. 84394D) offenbart Beschichtungszusammensetzungen, welche, in Gewichtsteilen ausgedrückt, die folgenden Bestandteile enthalten :

(VI) 100 Teile eines Orthosilikats der Formel $R_2{}^1Si(OR^2)_2$, $R^1Si(OR^2)_3$, oder $Si(OR^2)_4$, worin $R^1$ eine Alkylgruppe mit 1 bis 5 Kohlenstoffatomen oder die Phenylgruppe und $R^2$ eine Alkylgruppe von 1-3 Kohlenstoffatomen oder ein Wasserstoffatom bedeuten,

(VII) 5 bis 25 Teile eines Epoxidharzes,

(VIII) 30 bis 60 Teile eines Aminosilans der Formeln $H_2NR^3Si(R^1)(OR^2)_2$, $H_2NR^3Si(OR^2)_3$, $H_2NR^4NHR^3Si(R^1)(OR^2)_2$, oder $H_2NR^4NHR^3Si(OR^2)_3$, worin $R^3$ eine Alkylgruppen von 1 bis 5 Kohlenstoffatomen und $R^4$ eine Alkylgruppe von 1 bis 3 Kohlenstoffatomen oder eine Acylgruppe bedeuten,

(IX) 7 bis 8 Teile eines Polyamins der Formel $H_2N(R^5)_nNH(R^5)_nNH_2$ oder $H_2N(R^5NH)_nR^5NH_2$, worin $R^5$ eine Alkylgruppe von 1 bis 2 Kohlenstoffatomen und n eine Zahl von 1 bis 6 bedeuten,

(X) 5 bis 15 Teile Wasser,

(XI) 50 bis 150 Teile eines Lösungsmittel und

(XII) 2 bis 7 Teile eines sauren Katalysators.

In keiner dieser Publikationen wird die Möglichkeit einer Erhöhung der Viskosität der Mischungen und der Bildung von Thixotropie erwähnt.

Das erfindungsgemässe Verfahren zur Erhöhung der Viskosität von Epoxidharz enthaltenden Mischungen ist dadurch gekennzeichnet, dass man

(a) ein Epoxidharz,

(b) eine Base mit einer Basizität $pK_b$ von 9 oder weniger mindestens in einer die Hydrolyse des Silikats (c) katalysierenden Menge,

(c) ein organisches Orthosilikat der Formel I

$$(R^6O)_4\text{—}Si \qquad (I)$$

worin $R^6$ eine Alkylgruppe, die mit einem oder mehreren Halogenatomen oder Alkoxygruppen substituiert sein kann, eine gegebenenfalls mit einem oder mehreren Halogenatomen, Alkylgruppen oder Alkoxygruppen substituierte Arylgruppe, eine gegebenenfalls am Arylteil mit einem oder mehreren Halogenatomen, Alkylgruppen oder Alkoxygruppen substituierten Aralkylgruppe oder eine Heterocyclylalkylgruppe bedeutet, wobei alle genannten Alkyl- und Alkoxygruppen 1 bis 15 Kohlenstoffatome und die Arylgruppen 6 bis 10 Kohlenstoffatome aufweisen, und

(d) Wasser in einer das Silikat (c) mindestens teilweise hydrolisierenden Menge mischt und die erhaltene Mischung thixotrop werden lässt.

Wenn gewünscht, kann ausserdem

(e) ein Härtungsmittel für Epoxidharze beigefügt werden.

Die Erfindung betrifft daher auch die Verwendung der nach dem erfindungsgemäßen Verfahren erhaltenen thixotropen Mischung zur Herstellung von gehärteten Produkten.

Bei den für das erfindungsgemässe Verfahren verwendeten Epoxidharzen (a) handelt es sich vorzugsweise um solche Verbindungen, welche Gruppen der Formel II

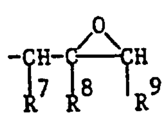

(II)

enthalten, welche direkt an Sauerstoff, Stickstoff oder Schwefel gebunden sind und worin sowohl $R^7$ und $R^9$ ein Wasserstoffatom darstellen, in welchem Fall $R^8$ ein Wasserstoffatom oder eine Methylgruppe bedeutet, oder $R^7$ und $R^9$ zusammen die Aethylengruppe bedeuten, in welchem Fall $R^8$ für ein Wasserstoffatom steht.

Als Beispiele für solche Harze sollen die folgenden erwähnt werden : Polyglycidyl- und Poly(β-methylglycidyl)ester (erhältlich durch Reaktion einer zwei oder mehr Carbonsäuregruppen enthaltenden Verbindung mit Epichlorhydrin, Glycerindichlorhydrin oder β-Methylepichlorhydrin in Gegenwart von Alkali) z. B. abgeleitet von aliphatischen Polycarbonsäuren, z. B. Oxalsäure, Bernsteinsäure, Glutarsäure, Adipinsäure, Pimelinsäure, Korksäure, Azelainsäure, Sebacinsäure oder dimerisierter trimerisierter Linolsäure, oder abgeleitet von cycloaliphatischen Polycarbonsäuren, z. B. Tetrahydrophthalsäure, 4-Methyl-tetrahydrophthalsäure, Hexahydrophthalsäure und 4-Methyl-hexahydrophthalsäure, und abgeleitet von aromatischen Polycarbonsäuren, z. B. Phthalsäure, Isophthalsäure und Terephthalsäure.

Weitere Beispiele sind Polyglycidyl- und Poly(β-methylglycidyl)äther, erhältlich durch Reaktion einer mindestens zwei freie alkoholische und/oder phenolische Hydroxylgruppen pro Molekül mit Epichlorhydrin unter alkalischen Bedingungen oder in Gegenwart eines Säurekatalysators und anschliessende Behandlung mit Alkali. Diesen Aethern können die folgenden Alkohole zugrunde liegen : Aethylenglykol, Diäthylenglykol und höhere Poly(oxyäthylen)-glykole, Propan-1,2-diol und Poly(oxypropylen)-glykole, Propan-1,3-diol, Butan-1,4-diol, Poly-(oxytetramethylen)-glykole, Pentan-1,5-diol, Hexan-1,6-diol, Hexan-2,4,6-triol, Glycerin, 1,1,1-Trimethylol-propan, Pentaerythrit, Sorbit und Polyepichlorhydrine ; cycloaliphatische Alkohole, wie Resorcit, Chinit, Bis(4-hydroxycyclohexyl)-methan, 2,2-Bis-(4-hydroxycyclohexyl)-propan und 1,1-Bis-(hydroxymethyl)-cyclohex-3-en ; und Alkohole mit aromatischem Kern, wie N,N-Bis-(2-hydroxyäthyl)-anilin und p,p'-Bis-(2-hydroxyäthylamino)-diphenylmethan. Den Glycidyläthern können auch folgende ein- oder mehrkernige Phenole zugrunde liegen : Resorcin, Hydrochinon, Bis-(4-hydroxyphenyl)-methan, 4,4-Dihydroxydiphenyl, Bis-(4-hydroxyphenyl)-sulfon, 1,1,2,2-Tetrakis-(4-hydroxyphenyl)-äthan, 2,2-Bis-(4-hydroxyphenyl)-propan (auch als Bisphenol A bekannt), 2,2-Bis-(3,5-dibrom-4-hydroxyphenyl)-propan und Novolake, hergestellt aus Aldehyden, wie z. B. Formaldehyd, Acetaldehyd, Chloral und Furfurylaldehyd, mit Phenolen, wie Phenol und im Ring durch Chloratome oder Alkylgruppen von 1 bis 9 Kohlenstoffatomen substituiertes Phenol, wie 4-Chlorphenol, 2-Methylphenol und 4-tert.-Butylphenol.

Als Poly-(N-glycidyl)-Verbindungen kommen beispielsweise solche in Frage, welche durch Dehydrochlorierung von Reaktionsprodukten aus mindestens zwei Aminwasserstoffatome enthaltenden Aminen mit Epichlorhydrin erhalten worden sind, wie Anilin, n-Butylamin, Bis-(4-Aminophenyl)-methan und Bis-(4-methylamino-phenyl)-methan, ferner Triglycidylisocyanurat und N,N'-Diglycidylderivate von cyclischen Alkylenharnstoffen, wie Aethylenharnstoffe und 1,3-Propylenharnstoffe, und von Hydantoinen, wie 5,5-Dimethyl-hydantoin.

Beispiele von Poly-(S-glycidyl)-Verbindungen sind Di-S-glycidylderivate von Dithiolen, wie Aethan-1,2-dithiol und Bis-(4-mercaptomethylphenyl)-äther.

Beispiele von Epoxidharzen mit Gruppen der Formel II, worin $R^7$ und $R^9$ zusammen die Aethylengruppen bilden, sind Bis-(2,3-epoxy-cyclopentyl)-äther, 2,3-Epoxy-cyclopentyl-glycidyläther und 1,2-Bis-(2,3-epoxycyclopentyloxy)-äthan.

Epoxidharze, in welchen die 1,2-Epoxidgruppen an verschiedene Heteroatome gebunden sind, sind beispielsweise die folgenden : N,N,O-Triglycidyl-Derivate von 4-Aminophenol, der Glycidyläther-glycidylester von Salicylsäure oder von p-Hydroxybenzoesäure, N-Glycidyl-N'-(2-glycidyloxy-propyl)-5,5-dimethyl-hydantoin und 2-Glycidyloxy-1,3-bis-(5,5-dimethyl-1-glycidyl-hydantoin-3-yl)-propan.

Gewünschtenfalls kann auch eine Mischung solcher Epoxidharze verwendet werden.

Bevorzugte Epoxidharze sind Polyglycidyläther, Polyglycidylester und N,N'-Diglycidylhydantoine. Besonders bevorzugte Harze sind Polyglycidyläther von 2,2-Bis-(4-hydroxyphenyl)-propan von Bis-(4-hydroxyphenyl)-methan oder von einem Novolak, hergestellt aus Formaldehyd und Phenol, oder aus Formaldehyd und einem im Ring durch ein Chloratom oder eine Alkylgruppe mit 1 bis 9 Kohlenstoffatomen substituierten Phenol, wobei der Epoxidgehalt mindestens 0,5 Aequivalent pro Kilogramm beträgt.

Die Menge der Base (b) muss genügend gross sein, damit sie die Hydrolyse des Silikats (c) katalysieren kann. Im allgemeinen sind Mengen zwischen 0,1 bis 10 %, berechnet auf das Gewicht des Epoxidharzes, bevorzugt.

Geeignete Basen haben vorzugsweise eine Basizität $pK_b$ unter etwa 7. Solche Basen mit einer Basizität über 7, aber weniger als 9, können auch verwendet werden, aber ihre katalytische Wirkung ist eher schwach und der Anstieg der Viskosität bis zu deren vollen Entfaltung kann mehrere Stunden in Anspruch nehmen.

Die Base (b) kann ein primäres, sekundäres oder tertiäres aliphatisches, araliphatisches, cycloaliphatisches oder heterocyclisches Amin sein. Bevorzugte Amine sind : Alkylendiamine, Polyalkylenpolyamine, N-Heterocyclen, aminoalkylierte N-Heterocyclen, Aralkylendiamine, Polyaminoamide, Trialkylamine, Aralkyldialkylamine, Mono- und Trialkanolamine Cycloalkylamine. Als typische Vertreter dieser Klasse seien die folgenden erwähnt : Hexamethylendiamin und seine 2,2,4- und 2,4,4-Trimethylderivate, Triäthylentetramin, N-Benzyldimethylamin, Triäthylamin, Piperidin, m-Xylylendiamin, 3-Aminomethyl-3,5,5,5-trimethyl-cyclohexylamin (auch als Isophorondiamin bekannt) und N-(2-Aminoäthyl)-piperazin.

Die Menge des verwendeten Silikats (c) hängt von den physikalischen Eigenschaften, welche von der Mischung erwartet werden, ab. Im allgemeinen werden Mengen zwischen 5 und 50 Gewichtsprozent, berechnet auf das Gewicht des Epoxidharzes, bevorzugt. Diesen organischen Orthosilikaten können irgendwelche Alkohole oder Phenole der Formel $R^6OH$ zugrunde liegen, aber, da der Alkohol oder das Phenol durch die Hydrolyse abgespalten wird, wird bevorzugt im Falle der Verwendung von Orthosilikaten, welche von flüchtigen Alkoholen (das sind Alkohole mit einem Siedepunkt bei atmosphärischem Druck unter 80 °C) abstammen, der abgespaltene Alkohol durch Destillation oder andere Methoden entfernt, bevor die Zusammensetzung mit dem Härtungsmittel (e) vermischt wird. Falls dieser flüchtige Alkohol nicht entfernt wird, kann ein üblicherweise unerwünschtes Schäumen der Mischung von Harz und Härter eintreten.

Bevorzugte Silikate (c) sind solche der Formel I, worin $R^6$ eine gegebenenfalls durch ein Chlor- oder Bromatom oder durch eine Alkoxygruppe mit 1 bis 6 Kohlenstoffatomen substituierte Alkylgruppe oder eine Phenylgruppe oder Benzylgruppe, welche beide unsubstituiert oder am Phenylring durch eine Alkylgruppe mit 1 bis 10 Kohlenstoffatomen substituiert sein können, bedeutet. Besonders bevorzugte Silikate (b) sind solche der Formel I, worin $R^6$ die Aethylgruppe, die durch eine Alkoxygruppe mit 2 bis 4 Kohlenstoffatomen oder durch ein Chloratom substituiert sein kann, eine Phenylgruppe, welche durch eine Alkylgruppe mit 1 bis 4 Kohlenstoffatomen substituiert sein kann, oder eine Benzylgruppe bedeutet.

Die Wassermenge (d) ist nicht kritisch, vorausgesetzt, sie ist genügend, um mindestens teilweise das

Silikat (c) zu hydrolysieren. Oft ist die Einverleibung grosser Mengen Wasser in eine Epoxidharzmischung wegen einer auftretenden Phasentrennung schwierig. Im allgemeinen werden Wassermengen von 0,5 bis 10 Mol auf eine Mol Silikat (c) bevorzugt.

Vorzugsweise handelt es sich bei der Base (b) und den Härter (e) um dasselbe Material, welches in genügender Menge zugefügt wird, um beiden Funktionen, nämlich der Katalyse der Silikathydrolyse und der Härtung des Epoxidharzes, zu genügen. Die in solchen Fällen verwendete Basenmenge ist diejenige, welche üblicherweise in Epoxidharzzusammensetzungen verwendet wird und dem Fachmann bekannt ist. Beispielsweise werden bei Verwendung von primären und sekundären Aminen 0,75 bis 1,25 Aminwasserstoffatome pro Epoxidgruppe des Epoxidharzes einverleibt, während bei Verwendung von tertiären Aminen 0,1 bis 20 % Amin, bezogen auf das Gewicht des Epoxidharzes, eingesetzt werden können.

Wenn die Base (b) nicht dasselbe wie das Härtungsmittel (e) ist, kann dieses ein schwaches Amin sein, wie ein aromatisches Amin, insbesondere ein o-, m- oder p-Phenylendiamin, Bis-(4-aminophenyl)-methan, Anilin/Formaldehyd-Harze, Bis-(4-aminophenyl)-äther, Bis-(4-aminophenyl)-keton, Bis-(4-aminophenyl)-sulfid, Bis-(3-aminophenyl)-sulfon und Bis-(4-aminophenyl)-sulfon. Die folgenden Härtungsmittel können ebenfalls verwendet werden : Dicyandiamid, Isocyanate und Isothiocyanate, mehrwertige Phenole, beispielsweise Resorcin, Hydrochinon, 2,2-Bis-(4-hydroxyphenyl)-propan und Phenyl/Aldehyd-Harze, Polythiole, wie « Thiokol » (« Thiokol » ist eine eingetragene Handelsmarke), und Polycarbonsäuren und deren Anhydride, z. B. Phthalsäureanhydrid, Tetrahydrophthalsäureanhydrid, Methylendomethylentetrahydrophthalsäureanhydrid, Nonenylbernsteinsäureanhydrid, Dodecenylbernsteinsäureanhydrid, Hexahydrophthalsäureanhydrid, Hexachloroendomethylentetrahydrophthalsäureanhydrid und Endomethylentetrahydrophthalsäureanhydrid und deren Mischungen, Maleinsäureanhydrid, Bernsteinsäureanhydrid, Pyromellitsäuredianhydrid, Benzophenon-3,3',4,4'-tetracarbonsäuredianhydrid, Polysebacinsäureanhydrid, Polyazelainsäureanhydrid, ferner die Säuren, welche diesen Anhydriden entsprechen, und ebenfalls Isophthalsäure, Terephthalsäure, Zitronensäure und Mellitsäure. Im weiteren können auch katalytische Härtungsmittel, z. B. Friedel-Crafts-Katalysatoren, wie Bortrifluorid und seine Komplexe, sowie Chelate aus Bortrifluorid mit z. B. 1,3-Diketonen, verwendet werden. Die verwendeten Mengen des Härtungsmittels hängen von dessen chemischer Art und von den gewünschten Eigenschaften der härtbaren Mischung und des gehärteten Produkts ab ; Die beste Menge kann leicht durch Methoden, welche dem Fachmann vertraut sind, bestimt werden. Beispielsweise kann bei Verwendung eines aromatischen Amins als Härtungsmittel (e) eine solche Aminmenge verwendet werden, dass auf ein Aequivalent Epoxidgruppen des Epoxidharzes 0,75 bis 1,25 Aminwasserstoffäquivalente des Amins fallen. Wenn man Polycarbonsäuren oder deren Anhydride verwendet, so setzt man beispielsweise auf ein Epoxidgruppenäquivalent 0,4 bis 1,1 Carbonsäureäquivalente ein, während man bei Verwendung von mehrwertigen Phenolen auf ein Epoxidgruppenäquivalent etwa 0,75 bis 1,25 phenolische Hydroxygruppenäquivalente des Härtungsmittels einsetzt. Im allgemeinen verwendet man auf 100 Gewichtsteile des Epoxidharzes etwa 1 bis 40 Gewichsteile eines katalytischen Härtungsmittels.

Je nach der Art des Härtungsmittels kann die Härtung bei Raumtemperatur (etwa 18 bis 25 °C) oder bei höheren Temperaturen (z. B. 50 bis 180 °C) durchgeführt werden.

Die Mischungen können noch weitere Zusätze enthalten, z. B. Füller, Verstärkungsmaterialien, Färbemittel, flammhemmende Mittel und Gleitmittel. Geeignete Streckmittel, Füllmittel und Verstärkungsmaterialien sind beispielsweise Glasfasern, Kohlenstoffasern, Aramidfasern, Glaskügelchen, Glimmer, Quarzmehl, Kalziumkarbonat, Cellulose, Kaolin, Wollastonit, gepulvertes Polyvinylchlorid und gepulverte Polyoleofinkohlenwasserstoffe, wie Polyäthylen und Polypropylen.

Die einen Härter enthaltenden Mischungen können z. B. als Laminatharze, Anstriche, Lacke, Imprägniermittel, Giessharze, Einbettharze, elektrische Isoliermassen, Versiegelungs- oder Dichtungsmassen, Klebstoffe und auch bei der Herstellung solcher Produkte verwendet werden. Sie können als Zweipack-System geliefert werden, wobei der eine Teil das Epoxidharz und das Silikat (c) und der andere die Base (b) und, wenn nötig, das Härtungsmittel (e).

In den folgenden Beispielen sind alle Teile Gewichtsteile ;

Definitionen :

« Epoxidharz I » bedeutet einen Diglycidyläther von 2,2-Bis(4-hydroxyphenyl)-propan mit einem Epoxidgehalt von 5,16 Aequivalenten pro Kilogramm.

« Epoxidharz II » bedeutet den Diglycidylester von Hexahydrophthalsäure mit einem Epoxidgehalt von 6,5 Aequivalenten pro Kilogramm.

« Amin I » bedeutet eine im Handel erhältliche Mischung von 2,2,4-Trimethylhexamethylendiamin und 2,4,4-Trimethylhexamethylendiamin in ungefähr gleichen Mengen.

« Amin II » bedeutet Isophorondiamin.

« Amin III » bedeutet Triäthylentetramin.

« Amin IV » bedeutet Bis-(4-aminophenyl)-methan.

« Amin V » bedeutet N-Benzyldimethylamin.

« Amin VI » bedeutet ein Polyaminoamid aus dimerisierter Linolsäure und Triäthylentetramin ; es ist unter der Bezeichnung « Versamid 140 » erhältlich ; « Versamid » ist eine registrierte Handelsmarke.

« Amin VII » bedeutete Pyridin.

« Amin VIII » bedeutet Triäthylamin.

Beispiel 1

20 Teile Epoxidharz I und 3 Teile Tetra-(2-äthoxyäthyl)-orthosilikat werden bei Zimmertemperatur zu einer dünnflüssigen Mischung verrührt. Getrennt davon wird eine weitere dünnflüssige Mischung aus 4,2 Teilen Amin I und 0,6 Teilen Wasser hergestellt. Nach Vereinigung der beiden Flüssigkeiten kann die Mischung zunächst sehr leicht gerührt werden, aber innerhalb 30 Sekunden bildet sich eine thixotrope Paste mit bestimmtem Fluss. Diese Paste härtet zu einer festen Substanz innerhalb 3 bis 4 Stunden und ergibt innerhalb 24 Stunden einen voll ausgehärteten, zähen, unschmelzbaren Festkörper.

Falls anstelle des angegebenen Silikats Tetrabenzylorthosilikat verwendet wird (4 Teile), bildet sich beim Stehen an der Luft eine thixotrope Haut, während die Hauptmenge 6 Stunden lang flüssig bleibt und sich dann verfestigt. Wenn der Versuch in über Kalziumchlorid getrockneter Luft durchgeführt wird, verfestigt sich die Masse ohne die Bildung einer thixotropen Haut in 4 Stunden.

Falls ein Gemisch aus Epoxidharz I, Tetrabenzylorthosilikat und Wasser ohne Zusatz eines Amins hergestellt wird, sind nach 48 Stunden keine Anzeichen einer Thixotropie oder Verfestigung vorhanden.

Beispiele 2 bis 11

Man geht wie in Beispiel 1 beschrieben vor und verwendet 20 Teile Epoxidharz I und die in der Tabelle I angegebenen Substanzen und Mengen. Die Tabelle gibt die Zeiten an, in welchen eine thixotrope Paste und eine feste Substanz gebildet werden.

Tabelle I

| Beispiel | Amin | | Orthosilikat | | Wasser | Zeit für die Bildung einer | |
|---|---|---|---|---|---|---|---|
| | Typ | Teile | Typ | Teile | (Teile) | Paste | Festsubstanz |
| 2 | I | 4,2 | Tetrabenzyl- | 3 | 0,5 | 1 Min. | 30 Min. |
| 3 | I | 4,2 | Tetra-(2-chloräthyl)- | 3 | 0,75 | 15 Sek. | 30 Min. |
| 4 | I | 4,2 | Tetraäthyl- | 5 | 1,7 | 2,5 Min. | 30 Min.* |
| 5 | I | 4,2 | Tetra-(2-n-butoxyäthyl)- | 4 | 0,6 | 30 Sek. | 3-4 Std. |
| 6 | II | 4,5 | Tetra-(2-äthoxyäthyl)- | 5 | 1,0 | 1,5 Min. | 4 Std. |
| 7 | III | 2,4 | Tetra-(2-äthoxyäthyl)- | 3 | 0,6 | 3 Min. | 2 Std. |
| 8 | I | 4,2 | Tetra-(2-äthoxyäthyl)- | 3 | 0,3 | 1 Min. | 3-4 Std. |
| 9 | I | 4,2 | Tetra-(2-äthoxyäthyl)- | 3 | 0,9 | 20 Sek. | 3-4 Std. |
| 10 | I | 4,2 | Tetra-(2-äthoxyäthyl)- | 3 | 1,2 | 20 Sek. | 3-4 Std. |
| 11 | VI | 10 | Tetra-(2-äthoxyäthyl)- | 2 | 0,8 | 3 Min. | 1,5 Std. |

*Diese Mischung bildet einen harten Schaum.

Die Zeit bis zur vollen Härtung ist für die Mischungen gemäss den Beispielen 2, 3, 5 und 8 bis 11 kleiner als 24 Stunden. In den andern Beispielen ist sie nicht bestimmt worden.

Beispiel 12

Die dünnflüssige Mischung aus 20 Teilen Epoxidharz I und 4 Teilen Tetrabenzylorthosilikat wird mit der Mischung aus 0,1 Teilen Amin V und 0,5 Teilen Wasser vereinigt. Die Menge des Amins genügt, um die Hydrolyse des Orthosilikats zu katalysieren, genügt aber nicht zur Härtung des Epoxidharzes. Die Mischung wird innerhalb etwa 1 1/2 Stunden dick und thixotrop und ist bei Raumtemperatur für mehr als 3 Monate lagerstabil. Falls man 4,2 Teile Amin I verwendet, bildet sich nach 30 Minuten eine feste Substanz, die nach 24 Stunden voll ausgehärtet ist.

Beispiele 13-15

Man geht vor wie in Beispiel 1 beschrieben, verwendet 20 Teile Epoxidharz I, 0,5 Teile Wasser und die in Tabelle II angegebenen Materialien und Mengen. Die Tabelle zeigt die Zeiten für die Bildung einer thixotropen Paste und eines festen Körpers an.

Tabelle II

| Beispiel | Amin Typ | Amin Teile | Orthosilikat Typ | Orthosilikat Teile | Zeit zur Bildung einer thixotropen Paste | Zeit zur Bildung einer Pasten Substanz |
|---|---|---|---|---|---|---|
| 13 | I | 4,2 | Tetraphenyl- | 4 | 30 Sek. | 4 Min. |
| 14 | I | 4,2 | Tetra-(m-cresyl)- | 4 | 30 Sek. | 5 Min. |
| 15 | I<br>IV | 1,0<br>4,9 | Tetrabenzyl- | 4 | 1 1/2 Min. | 24 Std. |

Beispiel 16

Eine dünnflüssige Mischung aus 20 Teilen Epoxidharz II und 4 Teilen Tetrabenzylorthosilikat wird mit einer Mischung von 5 Teilen Amin I und 0,5 Teilen Wasser vereinigt. Die Mischung wird dick und thixotrop innerhalb 30 Sekunden und verfestigt sich nach 25 Minuten.

Beispiel 17

Eine Mischung aus 20 Teilen Epoxidharz I und 2 Teilen Tetraäthylorthosilikat wird zu einer Mischung aus 0,1 Teilen Amin V und 0,7 Teilen Wasser gegeben. Die Mischung wird innerhalb 2 Stunden thixotrop. Sie wird in eine offene Schale gegeben und in einem Ofen auf 60° erwärmt und bei vermindertem Druck (20 mbar) gehalten, um das während der Hydrolyse abgespaltene Aethanol zu entfernen. Nachdem dies geschehen ist, ist das entstehende Produkt immer noch thixotrop und während mehr als 3 Monaten lagerstabil.

Beispiel 18

Eine Mischung aus 20 Teilen Epoxidharz I, 4 Teilen Tetrabenzylorthosilikat, einem Teil Amin VII und 0,5 Teilen Wasser wird innerhalb ungefähr 3 Stunden thixotrop und bleibt dann während mehr als 3 Monaten lagerstabil. Verwendet man 2 Teile Amin VII, wird die Mischung innerhalb 2 1/2 Stunden thixotrop und bleibt dann ebenfalls während mehr als 3 Monaten lagerstabil.

Beispiel 19

Man wiederholt Beispiel 18, ersetzt aber Amin VII durch 0,1 Teil oder 2,5 Teile Amin VIII. Im ersten Fall ist die Mischung innerhalb 30 Minuten thixotrop, während im zweiten Fall volle Thixotropie bereits nach 15 Minuten ausgebildet ist.

Beispiel 20

Eine Mischung aus 20 Teilen Epoxidharz I, 3 Teilen Tetrabenzylsilikat, 1,4 Teilen Dicyandiamid, 1,8 Teilen N-(p-Chlorophenyl)-N',N'-dimethylharnstoff als Beschleuniger und 0,4 Teile Wasser wird durch

eine Walzenmühle gelassen. Nach dem Durchgang durch die Mühle wird die Mischung erneut thixotrop. Eine auf 120 °C erhitzte Probe geliert in 14 Minuten.

## Ansprüche

1. Verfahren zur Erhöhung der Viskosität von Epoxidharz enthaltenden Mischungen, dadurch gekennzeichnet, dass man

(a) ein Epoxidharz,

(b) eine Base mit einer Basizität $pK_b$ von 9 oder weniger in mindestens in einer die Hydrolyse des Silikats (c) katalysierenden Menge,

(c) ein organisches Orthosilikat der Formel I

$$(R^6O)_4\text{—Si} \qquad (I)$$

worin $R^6$ eine Alkylgruppe, welche mit einem oder mehreren Halogenatomen oder Alkoxygruppen substituiert sein kann, eine Arylgruppe, welche mit einem oder mehreren Halogenatomen, Alkylgruppen oder Alkoxygruppen substituiert sein kann, eine Aralkylgruppe, welche am Arylteil mit einem oder mehreren Halogenatomen, Alkylgruppen oder Alkoxygruppen substituiert sein kann, oder eine Heterocyclylalkylgruppe bedeutet, wobei alle erwähnten Alkyl- und Alkoxygruppen 1 bis 15 Kohlenstoffatome und die Arylgruppen 6 bis 10 Kohlenstoffatome aufweisen, und

(d) Wasser in einer das Silikat (c) mindestens teilweise hydrolysierenden Menge mischt

und die erhaltene Mischung thixotrop werden lässt.

2. Verfahren gemäss Anspruch 1, dadurch gekennzeichnet, dass man auf ein Mol des Silikats 0,5 bis 10 Mol Wasser verwendet.

3. Verfahren gemäss Anspruch 1 oder 2, dadurch gekennzeichnet, dass man, berechnet auf das Epoxidharzgewicht, 5 bis 50 Gewichtsprozent des Silikats (c) verwendet.

4. Verfahren gemäss einem der Ansprüche 1-3, dadurch gekennzeichnet, dass man, berechnet auf das Epoxidharzgewicht, 0,1 bis 10 Gewichtsprozent der Base (b) verwendet.

5. Verfahren gemäss einem der Ansprüche 1-4, dadurch gekennzeichnet, dass als Base (b) ein aliphatisches, araliphatisches, cycloaliphatisches oder heterocyclisches primäres, sekundäres oder tertiäres Amin verwendet wird.

6. Verfahren gemäss einem der Ansprüche 1-5, dadurch gekennzeichnet, dass man eine zur Härtung des Epoxidharzes (a) genügende Menge Base (b) zugibt.

7. Verfahren gemäss Anspruch 6, dadurch gekennzeichnet, dass man als Base (b) ein primäres oder sekundäres Amin in einer Menge, dass auf eine Epoxidgruppe des Epoxidharzes 0,75 bis 1,25 Aminwasserstoffatome fallen, oder ein tertiäres Amin in einer Menge von 0,1 bis 20 Gewichtsprozent, berechnet auf das Gewicht des Epoxidharzes, verwendet.

8. Verfahren gemäss einem der Ansprüche 1-5, dadurch gekennzeichnet, dass man zusätzlich ein Härtungsmittel (e), welches nicht dasselbe ist wie die Base (b), verwendet.

9. Verfahren gemäss Anspruch 8, dadurch gekennzeichnet, dass man als Härtungsmittel (e) ein aromatisches Amin, Dicyandiamid, ein Isocyanat, ein Isothiocyanat, ein mehrwertiges Phenol, ein Polythiol, ein Polycarbonsäureanhydrid oder ein katalytisch wirkendes Härtungsmittel verwendet.

10. Verwendung der nach dem Verfahren gemäss einem der Ansprüche 6-9 erhaltenen thixotropen Mischung zur Herstellung von gehärteten Produkten.

## Claims

1. A method of increasing the viscosity of mixtures containing epoxide resin, which process comprises mixing

(a) an epoxide resin,

(b) a base having a basicity $pK_b$ of 9 or less in an amount at least sufficient to catalyse the hydrolysis of the silicate (c),

(c) an organic orthosilicate of formula I

$$(R^6O)_4\text{—Si} \qquad (I)$$

wherein

$R^6$ is an alkyl group which may be substituted by one or more halogen atoms or alkoxy groups, an aryl group which may be substituted by one or more halogen atoms, alkyl groups or alkoxy groups, an aralkyl group, the aryl moiety of which may be substituted by one or more halogen atoms, alkyl groups or alkoxy groups, or is a heterocyclylalkyl group, all alkyl and alkoxy groups mentioned containing from 1 to 15 carbon atoms and all aryl groups mentioned containing from 6 to 10 carbon atoms, and

(d) water in an amount at least sufficient to effect partial hydrolysis of the silicate (c),

and allowing the mixture so obtained to develop thixotropy.

2. A method according to claim 1, which method comprises using from 0.5 to 10 moles of water per mole of the silicate (c).

3. A method according to either of claim 1 or claim 2, which method comprises using 5 to 50 % by weight of the silicate (c), based on the weight of the epoxide resin (a).

4. A method according to any one of claims 1 to 3, which method comprises using 0.1 to 10 % by weight of the base (b), based on the weight of the epoxide resin (a).

5. A method according to any one of claims 1 to 4, which method comprises using as the base (b) an aliphatic, araliphatic, cycloaliphatic or heterocyclic primary, secondary or tertiary amine.

6. A method according to any one of claims 1 to 5, which method comprises adding an amount of the base (b) sufficient to cure the epoxide resin (a).

7. A method according to claim 6, which method comprises using as the base (b) a primary or secondary amine, the amount being such that there are 0.75 to 1.25 amine hydrogen atoms per epoxide group of the epoxide resin (a), or a tertiary amine in an amount of 0.1 to 20 % by weight, based on the weight of the epoxide resin (a).

8. A method according to any one of claims 1 to 5, which method comprises additionally using a curing agent (e), which is not the same as the base (b).

9. A method according to claim 8, wherein the curing agent (e) is an aromatic amine, dicyandiamide, an isocyanate, an isothiocyanate, a polyhydric phenol, a polythiol, a polycarboxylic acid anhydride or a catalytic curing agent.

10. Use of a thixotropic mixture obtained by a method according to any one of claims 6 to 9 for the preparation of cured products.

**Revendications**

1. Procédé pour augmenter la viscosité de mélanges contenant une résine époxyde, caractérisé en ce qu'on mélange

(a) une résine époxyde,

(b) une base ayant un $pK_b$ d'au plus 9 en au moins une quantité catalysant l'hydrolyse du silicate (c),

(c) un orthosilicate organique répondant à la formule I :

$$(R^6O)_4\text{—Si} \qquad (I)$$

dans laquelle $R^6$ désigne un groupe alkyle qui peut être substitué par un ou plusieurs atomes d'halogènes ou groupe alcoxy, un groupe aryle qui peut être substitué par un ou plusieurs atomes d'halogènes, groupes alkyles ou groupes alcoxy, un groupe aralkyle, qui peut être substitué dans sa partie aryle par un ou plusieurs atomes d'halogènes, groupes alkyles ou groupes alcoxy, ou un groupe hétérocyclylalkyle, tous les groupes alkyles et alcoxy mentionnés présentant de 1 à 15 atomes de carbone et les groupes aryles de 6 à 10 atomes de carbone, et

(d) de l'eau en une quantité hydrolysant au moins partiellement le silicate (c),

et on laisse le mélange obtenu devenir thixotrope.

2. Procédé suivant la revendication 1, caractérisé en ce qu'on utilise de 0,5 à 10 moles d'eau pour une mole de silicate.

3. Procédé suivant l'une des revendications 1 et 2, caractérisé en ce qu'on utilise, par rapport au poids de résine époxyde, de 5 à 50 % en poids du silicate (c).

4. Procédé suivant l'une quelconque des revendications 1 à 3, caractérisé en ce qu'on utilise, par rapport au poids de résine époxyde, de 0,1 à 10 % en poids de la base (b).

5. Procédé suivant l'une quelconque des revendications 1 à 4, caractérisé en ce qu'on utilise comme base (b) une amine aliphatique, araliphatique, cycloaliphatique ou hétérocyclique primaire, secondaire ou tertiaire.

6. Procédé suivant l'une quelconque des revendications 1 à 5, caractérisé en ce qu'on ajoute une quantité de base (b) suffisante pour le durcissement de la résine époxyde (a).

7. Procédé suivant la revendication 6, caractérisé en ce qu'on utilise comme base (b) une amine primaire ou secondaire en une quantité telle que l'on ait, pour un groupe époxyde de la résine époxyde, de 0,75 à 1,25 atome d'hydrogène aminé, ou une amine tertiaire en une quantité de 0,1 à 20 % en poids par rapport au poids de la résine époxyde.

8. Procédé suivant l'une quelconque des revendications 1 à 5, caractérisé en ce qu'on utilise en outre un durcisseur (e) qui n'est pas le même que la base (b).

9. Procédé suivant la revendication 8, caractérisé en ce qu'on utilise comme durcisseur (e) une amine aromatique, la cyanoguanidine (dicyanodiamide), un isocyanate, un isothiocyanate, un polyphénol, un polythiol, un anhydride d'acide polycarboxylique ou un durcisseur agissant catalytiquement.

10. Utilisation du mélange thixotrope obtenu par le procédé suivant l'une quelconque des revendications 6 à 9 pour la fabrication de produits durcis.